# EUROPÄISCHE PATENTSCHRIFT

(11) **EP 2 153 201 B1**
(45) Veröffentlichungstag und Bekanntmachung des Hinweises auf die Patenterteilung: **07.10.2015**
(21) Anmeldenummer: 08758144.3
(22) Anmeldetag: 23.05.2008
(51) Int. Cl.: G01N 21/3504, G01N 21/05, G01N 15/08

(54) **VORRICHTUNG ZUR BESTIMMUNG DER PERMEATIONSRATE MINDESTENS EINES PERMEATEN DURCH EIN EINE DIFFUSIONSSPERRE BILDENDES ELEMENT**
DEVICE FOR DETERMINING THE PERMEATION RATE OF AT LEAST ONE PERMEATE THROUGH AN ELEMENT THAT FORMS A DIFFUSION BARRIER
DISPOSITIF DE DÉTERMINATION DE LA VITESSE DE PERMÉATION D'AU MOINS UN PERMÉAT AU TRAVERS D'UN ÉLÉMENT FORMANT UNE BARRIÈRE DE DIFFUSION

(30) Priorität: 25.05.2007 DE 102007026073
(43) Veröffentlichungstag der Anmeldung: 17.02.2010
(73) Patentinhaber: Fraunhofer-Gesellschaft zur Förderung der angewandten Forschung e.V., 80686 München (DE)
(72) Erfinder: BEESE, Harald, 01705 Freital (DE); GRÄHLERT, Wulf, 01277 Dresden (DE); HOPFE, Volkmar, 01814 Kleingiesshübel (DE)
(74) Vertreter: Pfenning, Meinig & Partner GbR
(86) Internationale Anmeldenummer: PCT/DE2008/000904
(87) Internationale Veröffentlichungsnummer: WO 2008/145115

(56) Entgegenhaltungen:
- EP-A- 0 190 111
- WO-A-92/00515
- DE-A1- 10 345 507
- JP-A- 1 013 439
- US-A- 5 390 539
- US-A- 5 502 308
- US-A- 6 040 915
- US-A1- 2001 025 927
- US-A1- 2003 112 019
- US-A1- 2003 152 307
- US-A1- 2003 160 164
- US-B1- 6 506 346
- GIBSON P ET AL: "Measurement of water vapor diffusion through polymer films and fabric/membrane laminates using a diode laser spectroscope" POLYMER-PASTICS TECHNOLOGY AND ENGINEERING,, Bd. 38, Nr. 2, 1. Januar 1999 (1999-01-01), Seiten 221-239, XP009111729 ISSN: 0360-2559

## Beschreibung

Die Erfindung betrifft eine Vorrichtung und ein Verfahren zur Bestimmung der Permeationsrate mindestens eines Permeaten, durch ein eine Permeationssperre bildendes Element. Für die unterschiedlichsten Anwendungen und Werkstoffe, insbesondere polymere Werkstoffe, ist es häufig von Bedeutung, deren Permeabilität für bestimmte Permeate bestimmen zu können, was insbesondere in einer Entwicklungsphase solcher polymeren Werkstoffe, gegebenenfalls mit darauf ausgebildeten Barriereschichten oder solchen Schichtsystemen und auch für die Qualitätskontrolle gewünscht ist. Dabei können Permeationssperren bildende Elemente, insbesondere Folien, Membrane, Platten, rohrförmige Elemente, oder Bauteile sein, die auch aus bzw. mit Verbundwerkstoffen gebildet sein können.

Solche Werkstoffe und auch solche Substrate werden häufig für die Verpackung von Lebensmitteln oder anderen insbesondere oxidations- oder auch feuchtigkeitsempfindlichen Produkten eingesetzt. Solche Werkstoffe werden aber auch für Verkapselungen, beispielsweise für organische Leuchtdioden oder LCD-Displays eingesetzt, um insbesondere feuchtigkeitsempfindliche Komponenten vor solchen Einflüssen schützen zu können und deren Lebensdauer signifikant zu verlängern.

Die jeweilige Permeationsrate bestimmt dabei in hohem Maße die Qualität, die Funktionsfähigkeit und, wie bereits angesprochen, auch die Lebensdauer sowie die Haltbarkeit von elektronischen Bauelementen, Lebensmitteln oder Pharmaka.

Dabei steigen die Forderungen nach sehr geringen Permeationsraten und es werden Ultrabarriereeigenschaften gewünscht.

Mit den herkömmlichen Messverfahren können aber solche sehr kleinen Permeationsraten entweder nicht oder nur unbefriedigend über sehr lange Messzeiten bestimmt werden. Dabei spielt das sichere Beherrschen von Adsorptions- oder Desorptionsprozessen, die bei den geringen Permeatkonzentrationen enormen Schwankungen unterworfen sind, eine wichtige Rolle.

Aus US 5,390,539 ist eine Vorrichtung zur Bestimmung der Permeabilitäten von Membranen für Wasserdampf bekannt. Bei dieser Vorrichtung ist eine gesonderte Absorptionsmesskammer vorgesehen. In diese Absorptionsmesskammer wird mittels eines Trägergases Wasserdampf, der durch eine für Wasserdampf permeable Membran aus einem oberen Gehäusebereich durch die Membran in einen unteren Gehäusebereich gelangt ist, über Leitungen zugeführt. Durch die Absorptionsmesskammer wird Infrarotstrahlung hindurch und auf einen optischen Detektor, vor dem ein optisches Filter angeordnet ist, gerichtet. Je nach dem Anteil des im Trägergas enthaltenen Wasserdampfs wird die Infrarotstrahlung mehr oder weniger absorbiert, was mit dem optischen Detektor detektiert werden kann.

Dabei liegt es auf der Hand, dass aus mehreren Gründen die Messgenauigkeit und die erforderliche Messzeit unbefriedigend sind. Dabei ist zum einen die Entfernung der Absorptionsmesskammer vom eigentlichen Ort der Permeation groß und zum anderen ist es für die Bestimmung eines anderen Permeaten außer Wasserdampf erforderlich, ein anderes optisches Filter vor einem optischen Detektor anzuordnen, also einen entsprechenden Austausch vorzunehmen, was insbesondere für die Bestimmung mehrerer Permeaten auch die Kosten erhöht.

So ist aus US 5,390,539 B1 eine Vorrichtung zur Bestimmung der Permeabilität einer Membran für Wasserdampf bekannt. Die Membran trennt dabei zwei Kammern voneinander. Das durch die Membran hindurch gelangende Wasser wird mit einem Trägergas über eine Leitung in eine gesondert angeordnete Absorptionszelle geführt, in der mit einer IR-Strahlungsquelle und einem optischen Detektor eine Detektion erfolgt.

Die WO 92/00515 A1 betrifft u. a. einen Aufbau von Zellen. Dabei ist eine Kammer vorhanden in der verschiedene chemische Reaktionen durchgeführt werden können. Ausgewählte Reaktionsprodukte können durch die Membran in eine Zelle zur optischen Bestimmung gelangen.

In EP 0 190 111 A2 ist ein Aufbau beschrieben, bei dem eine Probe mit einem Medium oder Reagenz in Kontakt gebracht werden soll, beide sind durch eine Membran voneinander getrennt. Die Membran ist dabei ein Reflektor, um Laserstrahlung, die auf die Membran gerichtet ist, zu einem Detektor zu reflektieren.

Von P. Gibson und D. Rivin ist aus "Measurement of water vapour diffusion through polymer films and fabric/membrane laminates using an diode laser spectroscope"; Poly.-Plast. Technol. Eng.; vol. 28 (1999); Seiten 221-239; XP-009111729 bekannt, ein spektroskopisches System mit Infrarotstrahlung einzusetzen, um die Diffusionsrate von Wasserdampf zu bestimmen. Das spektroskopische System ist dabei in einer gesondert angeordneten Kammer angeordnet, in der eine Bestimmung für Proben durchgeführt werden soll.

Die US 2003/0152307 betrifft eine Vorrichtung zur Detektion mehrerer Gasspezies unter Einsatz von Laserstrahlung. Diese wird über optische Fasern zur Spektralanalyse für jeweils ein Gas geführt. Dabei werden, wie bei optischen Fasern üblich auch Kollimatoren eingesetzt.

Es ist daher Aufgabe der Erfindung, Möglichkeiten zu schaffen, mit denen sehr kleine Permeationsraten mit ausreichender Messempfindlichkeit, Messgenauigkeit und mit vertretbarem Zeitaufwand bestimmt werden können.

Erfindungsgemäß wird diese Aufgabe mit einer Vorrichtung, die die Merkmale des Anspruchs 1 aufweist, gelöst. Mit in untergeordneten Ansprüchen bezeichneten Merkmalen können vorteilhafte Ausgestaltungen und Weiterbildungen der Erfindung erreicht werden.

Eine erfindungsgemäße Vorrichtung zur Bestimmung der Permeationsrate mindestens eines Permeaten durch ein eine Permeationssperre bildendes Element, das bevorzugt mit einem polymeren Stoff ausgebildet ist, weist eine Detektionskammer auf, die von einer Permeatkammer getrennt ist. Zumindest die Detektionskammer ist gegenüber der Umgebungsatmosphäre hermetisch abgedichtet. Ein eine Permeationssperre bildendes Element bildet dabei eine Trennwand zwischen Permeatkammer und Detektiosnskammer und es ist klemmend zwischen den beiden Kammern befestigt. Dieses muss hierzu nicht zwingend die gesamte Trennfläche der beiden Kammern ausfüllen, sondern es reicht aus, wenn eine Grenzfläche mit ausreichender Flächengröße durch das Element gebildet ist. Dabei sollte die Größe der Fläche des Elementes, durch die eine Permeation in die Detektionskammer erfolgen kann, bekannt sein.

Ein eine Permeationssperre bildendes Element sollte vorteilhaft auch zumindest über die gesamte Fläche über die eine Permeation erfolgen kann eine konstante Dicke und ggf. auch eine homogene Materialzusammensetzung aufweisen. Für den Fall, dass ein Element mit einer flächigen Beschichtung versehen worden ist, sollte auch die Beschichtung über diese Fläche gleichmäßig ausgebildet sein, was die Schichtdicke(n) einer aber auch mehrerer Schichten sowie deren Konsistenz betrifft.

In einer Permeatkammer ist ein gasförmiges Permeat, ein Gas oder eine Flüssigkeit enthalten, in dem/der wieder mindestens ein Permeat enthalten ist. Dabei besteht die Möglichkeit, ein solches mindestens einen Permeaten enthaltendes Gas oder eine Flüssigkeit in die Permeatkammer kontinuierlich zu und wieder abzuführen, wobei möglichst mit konstantem Druck und konstantem Volumenstrom des/der zu- und wieder abgeführten Gases/Flüssigkeit innerhalb der Permeatkammer gearbeitet werden sollte. In einer Permeatkammer kann aber auch ein konstantes Flüssigkeits- oder Gasvolumen enthalten sein bzw. das Flüssigkeit- oder Gasvolumen oder vorgebbare eine Flüssigkeits- oder Gasmenge statisch vorliegen.

Durch die Detektionskammer wird Strahlung einer Laserlichtquelle mit einer Wellenlänge, die einer Absorptionswellenlänge des jeweiligen Permeaten entspricht, zumindest aber in einem eng begrenzten Wellenlängenbereich um eine solche Absorptionswellenlänge eines Permeaten liegt, geführt. Der Laserstrahl durchdringt dabei die Atmosphäre in der Detektionskammer und trifft auf einen optischen Detektor, der zur Bestimmung einer Intensität mindestens einer jeweiligen Absorptionswellenlänge eines Permeaten geeignet ausgebildet ist.

Je nach Anteil eines durch das eine Permeationssperre bildenden Elementes in die Detektionskammer gelangten Permeaten wird in der dort vorhandenen Atmosphäre die Laserstrahlung mehr oder weniger absorbiert, was mit dem optischen Detektor erfasst werden kann.

Die Bestimmung kann dabei kontinuierlich über die Zeit, zur Bestimmung der jeweiligen Permeationsrate, erfolgen. Es besteht aber auch die Möglichkeit, die Messungen zu vorgegebenen größeren diskreten Zeitpunkten durchzuführen und aus den so erhaltenen Messwerten die jeweilige Permeationsrate rechnerisch zu bestimmen, was beispielsweise auch durch eine Interpolation möglich ist.

Für eine Bestimmung der Permeation sollte der Abstand des jeweiligen Laserstrahls zur Oberfläche des Elementes innerhalb der Detektionskammer klein gehalten sein, um die Messempfindlichkeit zu erhöhen. Dadurch kann das Totvolumen innerhalb der Detektionskammer klein gehalten werden, das nicht vom Laserstrahl durchdrungen und für die Detektion berücksichtigt werden kann.

Die Messempfindlichkeit kann außerdem dadurch erhöht werden, dass der vom Laserstrahl durch die Detektionskammer zurückgelegte Weg verlängert wird, bevor er auf den optischen Detektor auftrifft. Dies kann durch mindestens eine Reflexion erreicht werden, bei der der Laserstrahl seine Richtung ändert. Es besteht aber auch die Möglichkeit, mehrfache Reflexionen durch den Laserstrahl vorzusehen. Hierfür kann mindestens ein reflektierendes Element bevorzugt innerhalb oder aber auch außerhalb der Detektionskammer angeordnet sein. Es besteht aber auch die Möglichkeit, die innere Wandung der Detektionskammer zumindest bereichsweise für die Laserstrahlung reflektierend auszubilden oder so zu beschichten, wobei lediglich gesichert sein soll, dass der Laserstrahl auch auf den jeweiligen optischen Detektor auftrifft.

Dabei kann eine Reflexion des Laserstrahls so durchgeführt werden, dass er mehrfach die Richtung innerhalb der Detektionskammer wechselt und so ein großer Bereich des Detektionskammervolumens überstrichen und nicht nutzbares Totvolumen reduziert wird.

Das innere Volumen der Detektionskammer soll kleiner, als das Volumen einer Permeatkammer sein. Dadurch kann das Totvolumen, also ein Bereich, der nicht von Laserstrahlung überstrichen wird, reduziert werden.

In bevorzugter Ausführung sollte als Laserlichtquelle mindestens eine Laserdiode eingesetzt sein. Es können aber auch andere Laserlichtquellen, wie beispielsweise Quantenkaskadenlaser, Bleisalzlaser oder Festkörperlaser (Faserlaser, Scheibenlaser) in Verbindung mit der Erfindung eingesetzt werden.

Wird eine Laserlichtquelle eingesetzt, die monochromatische Strahlung einer Wellenlänge emittiert, die einer Absorptionswellenlänge eines Permeaten entspricht, kann eine zweite Laserlichtquelle eingesetzt werden, die Laserstrahlung mit davon abweichender Wellenlänge emittiert, die dann auch nicht von einem Permeaten absorbiert und auf einen weiteren oder den einen Detektor gerichtet wird. Mit diesen beiden bestimmten Intensitäten kann eine Quantifizierung des durch das eine Permeationssperre bildenden Elementes diffundierten Permeaten erreicht werden.

Günstig ist es, insbesondere für eine Detektion von mehreren Permeaten, durchstimmbare Laserlichtquellen einzusetzen, mit denen Laserstrahlung mit ausgewählten Wellenlängen emittiert werden kann, die dann wiederum bestimmten Absorptionswellenlängen der jeweiligen Permeate zugeordnet sein können. Es ist so aber auch möglich bei der Durchstimmung den Wellenlängenbereich einer Absorptionsbande eines Permeaten zu überstreichen und dadurch eine Quantifizierung des in die Detektionskammer diffundierten Permeaten zu erreichen.

Somit besteht neben der Möglichkeit einer kontinuierlichen oder auch, wie bereits erwähnt, zeitlich sequentiellen Bestimmung eines Permeaten, innerhalb einer Bestimmung auch mindestens eines weiteren Permeaten bezüglich der jeweiligen Permeationsrate. Dabei kann ein alternierender Wechsel von emittierter Laserstrahlung mit jeweils unterschiedlichen Wellenlängen, bei zwei voneinander unterschiedlichen Wellenlängen oder eine zyklische Messung bei mehr als zwei Wellenlängen durchgeführt werden.

Es besteht aber auch die Möglichkeit, mindestens zwei voneinander unterschiedliche Laserlichtquellen, die Laserstrahlung mit voneinander abweichenden Wellenlängen emittieren, an einer erfindungsgemäßen Vorrichtung einzusetzen. Auch bei einer solchen Ausführungsform kann ein alternierender oder zyklischer Betrieb dieser Laserlichtquellen durchgeführt werden, wobei dann mindestens ein optischer Detektor vorhanden sein soll.

Bei der erfindungsgemäßen Vorrichtung besteht außerdem die Möglichkeit, an der Detektionskammer mindestens ein Fensterelement vorzusehen. Durch ein solches Fensterelement kann dann ein Laserstrahl, der von einer Laserlichtquelle emittiert worden ist, in das Innere der Detektionskammer gerichtet werden. Der Laserstrahl kann dann nach Durchdringen der Atmosphäre innerhalb der Detektionskammer auf einen optischen Detektor, der innerhalb der Detektionskammer angeordnet ist, zur Bestimmung der Permeationsrate, auftreffen. Es besteht aber auch die Möglichkeit, einen solchen optischen Detektor außerhalb der Detektionskammer anzuordnen und dann ein zweites Fensterelement an der Detektionskammer vorzusehen, durch das der Laserstrahl dann auf den außerhalb des zweiten Teils der Detektionskammer angeordneten optischen Detektor auftreffen kann.

In einer weiteren Alternative besteht aber auch die Möglichkeit, innerhalb der Detektionskammer ein reflektierendes Element anzuordnen, auf das der in die Detektionskammer eintretende Laserstrahl auftrifft und zurück durch dieses Fensterelement auf einen dann wieder außerhalb der Detektionskammer angeordneten optischen Detektor auftreffen kann.

Bei der Bestimmung einer Permeationsrate mindestens eines Permeaten kann in die Detektionskammer ein Trägergas zugeführt werden, in dem ein Permeat mit bekannter Konzentration oder kein Permeat enthalten ist. In diesem Fall sollte auch eine dementsprechende Abfuhr über einen Auslass aus der Detektioskammer möglich sein. Dabei sollte möglichst in der Detektionskammer ein konstanter Druck vorliegen und die Zufuhr eines Trägergases mit einem vorgegebenen und konstant gehaltenem Volumenstrom durchgeführt werden.

In einer anderen Alternative besteht aber auch die Möglichkeit, ein solches Gas innerhalb einer nach außen abgeschlossenen Detektionskammer gasdicht gegenüber der äußeren Umgebungsatmosphäre abzuschließen. In diesem Fall erfolgt durch eine Permeation innerhalb der Atmosphäre der Detektionskammer eine Aufkonzentration des jeweiligen Permeaten, was bei der Bestimmung der Permeationsrate berücksichtigt werden kann.

Bei der Erfindung sollte bevorzugt Laserstrahlung im Wellenlängenbereich des infraroten, im Bereich des sichtbaren Lichts, des nahen infraroten, des mittleren infraroten und/oder des fernen infraroten Strahlungsspektrums eingesetzt werden, um dadurch eine höhere Empfindlichkeit und Selektivität für die jeweiligen Permeaten erreichen zu können.

Der durch das Innere der Detektionskammer geführte Laserstrahl soll mit einem geeigneten optischen Element kollimiert sein, so dass eine nahezu parallele mit geringer Divergenz versehene Laserstrahlung genutzt werden kann.

Zur Gewinnung eines Referenzsignals besteht außerdem die Möglichkeit, die von der jeweiligen Laserlichtquelle, zumindest jedoch von einer eingesetzten Laserlichtquelle emittierte Laserstrahlung in zwei Laserstrahlen aufzuteilen und dabei einen der beiden Laserstrahlen direkt, d.h. außerhalb der Detektionskammer, unmittelbar auf einen optischen Detektor zu richten. Dies kann beispielsweise über eine geeignete optische Faser erfolgen, um Umgebungsatmosphäreneinflüsse zu vermeiden.

In ganz besonders bevorzugter Ausführungsform können mindestens eine Laserlichtquelle und ein optischer Detektor ein Laserdiodenspektrometer bilden, was sich insbesondere auf die Kosten günstig auswirken kann. Außerdem besteht die Möglichkeit, Laserdioden durch Veränderung der Leistung oder einer Temperatur so durchzustimmen, dass von ihnen Laserstrahlung mit unterschiedlichen Wellenlängen emittiert werden kann. Hierzu können beispielsweise Peltierelemente oder andere geeignete Thermistoren in Verbindung mit Laserdioden eingesetzt werden.

Wie bereits angesprochen besteht die Möglichkeit, ein Verfahren zur Bestimmung der Permeationsrate mindestens eines Permeaten so durchzuführen, dass mindestens ein Permeat enthaltendes Gas, eine solche Flüssigkeit oder gasförmiges Permeat mit konstanter Konsistenz und bevorzugt mit konstantem Volumenstrom, der Permeatkammer kontinuierlich zu- und daraus wieder abgeführt wird. Dabei sollte möglichst auch ein konstanter Innendruck in der Detektionskammer eingehalten werden.

In Alternative dazu kann aber auch eine statische Gaskonzentration dauerhaft in der Permeatkammer, während der Bestimmung einer Permeationsrate, enthalten sein.

Eine Flüssigkeit, wie z.B. Wasser kann aber auch in einer Permeatkammer eingeschlossen gehalten sein. Die Permeation kann dann als Dampf über ein eine Permeationssperre bildendes Element in die Detektionkammer erfolgen.

Ein oder mehrere Permeat(en) können in Folge einer Permeabilität eines eine Permeationssperre bildenden Elementes durch dieses hindurch in die Detektionskammer gelangen. Innerhalb der Detektionskammer kann dann die Bestimmung der Permeationsrate durchgeführt werden, wie dies bereits vorab mittels des Laserstrahls und des optischen Detektors erläutert worden ist, durchgeführt werden.

Eine erfindungsgemäße Vorrichtung kann vor Beginn einer Permeationsratenbestimmung gereinigt werden, um insbesondere Reste vorab eingesetzter Gase oder Flüssigkeiten zu entfernen, was bevorzugt durch eine Spülung mit einer geeigneten neutralen Flüssigkeit (Nullspülung) und/oder mit geeigneten Gasen für eine Reinigung der Oberflächen in den Kammern erreicht werden kann.

Mit der Erfindung können sehr hohe Nachweisempfindlichkeiten und Selektivitäten bei der Permeationsratenbestimmung erreicht werden. Außerdem können unterschiedliche Permeaten, wie beispielsweise Wasser (Dampf, Feuchtigkeit), Sauerstoff, Methan, Kohlendioxid, Kohlenmonoxid, Ammoniak, Fluorwasserstoffe aber auch andere Permeaten mit der Erfindung detektiert werden.

Wie bereits angesprochen, besteht aber auch die Möglichkeit, mehr als einen Permeaten bei einer Bestimmung zu berücksichtigen.

Durch die Detektion und Bestimmung unmittelbar in der Vorrichtung fallen Transportwege weg, die die Messgenauigkeit, Messempfindlichkeit und die Zeitkonstante negativ beeinflussen.

Die Erfindung gestattet einen statischen und auch dynamischen Betrieb, wobei ein großer Dynamikbereich berücksichtigt werden kann.

Es kann bei unterschiedlichen Drücken, sowohl statisch, wie auch dynamisch, z.B. innerhalb der Permeatkammer, detektiert werden.

Es besteht außerdem die Möglichkeit, herkömmliche Messsysteme, wie beispielsweise bereits kommerziell erhältliche Laserdiodenspektrometer einzusetzen, die dann lediglich an eine erfindungsgemäß ausgebildete Vorrichtung angeschlossen oder angeflanscht werden können.

Eine erfindungsgemäße Vorrichtung arbeitet verschleißfrei und bildet ein regenerationsfreies Messsystem. Es besteht auch die Möglichkeit, nach einmaliger Kalibrierung eine langzeitstabile Bestimmung von Permeationsraten durchführen zu können. Vor Beginn einer neuen Messung von Permeationsraten kann eine Spülung von Permeatkammer und/oder Detektionskammer vorgenommen werden, um Restkontaminierungen zu beseitigen.

Wie bereits vorab angesprochen, besteht die einfache Möglichkeit, die jeweiligen optischen Weglängen, über die ein Laserstrahl durch das Innere der Detektionskammer geführt werden kann, durch Mehrfachreflexizu verlängern.

Bei einer Anordnung einer Laserlichtquelle und eines optischen Detektors innerhalb der Detektionskammer kann auch auf Fensterelemente verzichtet werden. Für die Strahlführung können außerdem Prismen, optische Linsen oder auch Fasern anstelle von reflektierenden Elementen eingesetzt werden.

In einer geringfügigen Abwandlung der Erfindung besteht die Möglichkeit, auch nach dem Prinzip der Cavity-Ring-Down-Spektroskopie oder der fotoakustischen Spektroskopie zu arbeiten.

Nachfolgend soll die Erfindung beispielhaft näher erläutert werden.

Dabei zeigen:
Figur 1 in schematischer Form in einer Schnittdarstellung ein Beispiel einer erfindungsgemäßen Vorrichtung und
Figur 2 eine Detektionskammer, die an eine Permeatkammer einer nicht erfindungsgemäßen Vorrichtung angeschlossen werden kann.

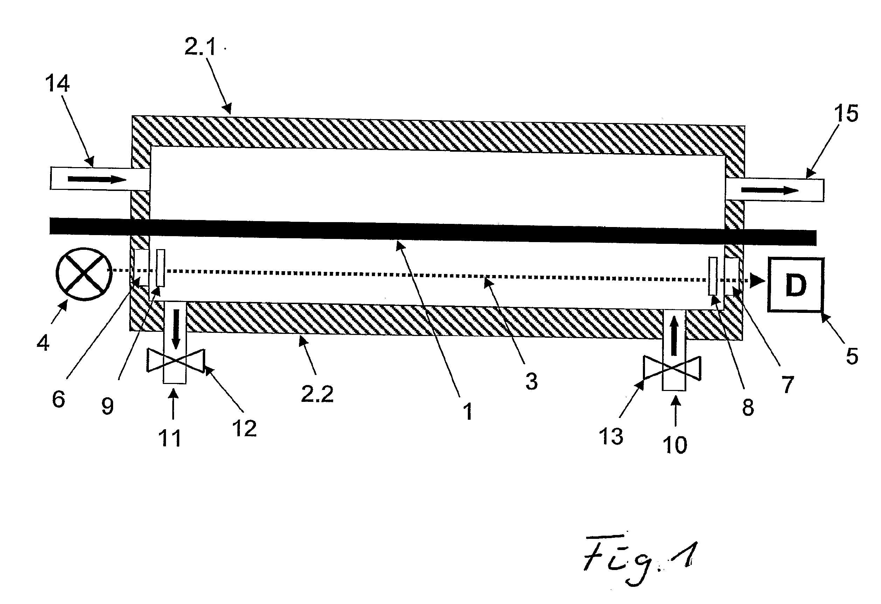

Figur 1 zeigt ein erstes Beispiel einer erfindungsgemäßen Vorrichtung mit einer Permeatkammer 2.1, die mit einer Detektionskammer 2.2 verbunden ist. Permeatkammer 2.1 und Detektionskammer 2.2 weisen Hohlräume auf. Die beiden Kammern 2.2 und 2.1 sind durch ein hier flächiges ein eine Permeationssperre bildendes Element 1 zumindest mit ihren Hohlräumen voneinander getrennt. Dabei kann das Element 1 zwischen den beiden Kammern 2.2 und 2.1 klemmend gehalten sein. Gegenüber der Umgebungsatmosphäre sind die Hohlräume der beiden Kammern 2.2 und 2.1 hermetisch abgeschlossen.

Durch einen Zufluss 14 kann ein mindestens einen Permeaten enthaltendes Gas, eine Flüssigkeit oder ein gasförmiges Permeat, wie mit dem links angeordneten Pfeil dargestellt, in die Permeatkammer 2.1 zu- und auf der gegenüber liegenden Seite über den Abfluss 15 wieder abgeführt werden. Dabei sollen konstante Druckverhältnisse und die Zufuhr mit konstantem Volumenstrom und konstanter Konsistenz in definierter Form erfolgen, um reproduzier- und vergleichbare Werte zu ermitteln. An der hier unten dargestellt angeordneten Detektionskammer 2.2 sind zwei Fensterelemente 6 und 7 an gegenüber liegenden Seiten der Detektionskammer 2.2 angeordnet. Durch das Fensterelement 6 kann Laserstrahlung, die von der Laserlichtquelle 4, hier ein Diodenlaser, emittiert wird, in das Innere der Detektionskammer 2.2 eintreten. Dabei kann der Laserstrahl 3 durch das reflektierende Element 8 zurück in Richtung auf ein zweites Element 9 und von diesem auf einem nach einem optischen Fensterelement 7 angeordneten optischen Detektor 5 gerichtet werden, wobei bei entsprechender Gestaltung und Ausrichtung von reflektierenden Elementen 8 und 9 sowie dem Einfallswinkel des Laserstrahls 3 mehr als zwei Reflexionen innerhalb der Detektionskammer 2.2 zur Verlängerung des vom Laserstrahl 3 darin zurück gelegten Weges möglich sind.

Die Laserlichtquelle 4 emittiert dabei Laserstrahlung mit einer Wellenlänge von 1,38 µm, was einer Absorptionswellenlänge für Wasserdampf entspricht. Durch die mehrfache Reflexion des Laserstrahls 3 innerhalb der Detektionskammer 2.2 kann der zurückgelegte Messweg vergrößert und so die Sensitivität erhöht werden, um die momentane Konzentration des Permeaten innerhalb der Detektionskammer 2.2 durch Bestimmung der Intensität des auf den optischen Detektor 5 auftreffenden Laserstrahls 3 zu ermitteln. Durch entsprechende zeitliche Bestimmung kann daraus die jeweilige Permeationsrate des Permeaten durch das Element 1 bestimmt werden.

Bei dem in Figur 1 gezeigten Beispiel ist ebenfalls für eine Zufuhr und eine Abfuhr ein Anschluss 10 und ein Abfluss 11 für ein Trägergas an der Detektionsskammer 2.2 dargestellt. Das zu- und wieder abgeführte Trägergas ist bei der Zufuhr frei von dem zumindest jeweiligen Permeaten. Die Zufuhr des Trägergases soll dabei so geregelt sein, dass diese mit einem konstanten Volumenstrom sowie einer konstanten Konsistenz des Trägergases durchgeführt wird, so dass konstante Verhältnisse in der Detektionskammer 2.2 eingehalten werden können. Zur Realisierung statischer Bedingungen sind die Ventile 12 und 13 vorhanden.

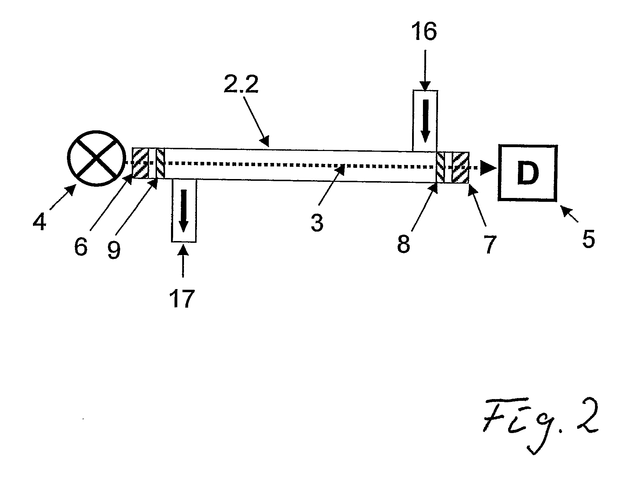

Die in Figur 2 gezeigte Detektionskammer 2.2 kann an eine Permeatkammer 2.1 angeschlossen oder daran angeflanscht werden. Dabei gelangt ein mindestens einen Permeaten enthaltendes Trägergas über einen Zufluss 16 in die Detektionskammer 2.2 und kann aus dieser über einen Abfluss 17 wieder abgeführt werden, wie dies mit den dick gedruckten Pfeilen angedeutet ist.

Alle übrigen Elemente entsprechen denen, wie sie auch beim Beispiel nach Figur 1 vorgesehen und mit gleichen Bezugszeichen versehen sind.

In nicht dargestellter Form besteht aber auch die Möglichkeit, sämtliche optischen Elemente, also die Laserlichtquelle 4, die reflektierenden Elemente 8 und 9 und den optischen Detektor 5 innerhalb der Detektioskammer 2.2 anzuordnen, wobei dann auf die Fensterelemente 6 und 7 verzichtet werden kann.

So sind die eigentlich für die Detektion und Bestimmung der Permeationsrate erforderlichen Elemente alle innerhalb der Detektionskammer 2.2 aufgenommen und so geschützt angeordnet, so dass äußere Einflüsse die Bestimmung der Permeationsrate nicht beeinflussen können.

Über den Anschluss 16 gelangt das Permeat oder ein Permeat enthaltendes Gas, der/das durch das Element 1 aus einer Permeatkammer 2.1 (hier nicht dargestellt) diffundiert ist, in die Detektionskammer 2.2 und tritt durch den Abfluss 17 wieder aus.

## Patentansprüche

1. Vorrichtung zur Bestimmung der Permeationsrate mindestens eines Permeaten durch ein eine Permeationssperre bildendes Element (1), umfassend das die Permeationssperre bildende Element (1), welches eine Trennwand zwischen einer Permeatkammer (2.1) und einer Detektionskammer (2.2) bildet, dabei in der Permeatkammer (2.1) ein mindestens einen Permeaten enthaltendes Gas oder eine solche Flüssigkeit oder gasförmiges Permeat zugeführt oder enthalten ist und durch die Detektionskammer (2.2) Strahlung mindestens einer Laserlichtquelle (4), mit einer Wellenlänge, die einer Absorptionswellenlänge des jeweiligen Permeaten entspricht, als kollimierter Laserstrahl (3) auf mindestens einen optischen Detektor (5), zur Bestimmung der Permeationsrate bei einer Absorptionswellenlänge des Permeaten, gerichtet ist;
wobei das Element (1) zwischen Permeatkammer (2.1) und Detektionskammer (2.2) klemmend befestigt ist; und
das innere Volumen der Detektionskammer (2.2) kleiner als das Volumen der Permeatkammer (2.1) ist.

2. Vorrichtung nach Anspruch 1, **dadurch gekennzeichnet, dass** der Laserstrahl (3) innerhalb der Detektionskammer (2.2) mindestens einmal durch eine Reflexion seine Richtung ändert, so dass der innerhalb der Detektionskammer (2.2) zurückgelegte Weg verlängert ist, bevor der Laserstrahl (3) auf den optischen Detektor (5) auftrifft.

3. Vorrichtung nach einem der vorhergehenden Ansprüche, **dadurch gekennzeichnet, dass** mindestens ein reflektierendes Element (8, 9) innerhalb der Detektionskammer (2.2) angeordnet ist.

4. Vorrichtung nach einem der vorhergehenden Ansprüche, **dadurch gekennzeichnet, dass** die innere Wandung der Detektionskammer (2.2) zumindest bereichsweise für die Laserstrahlung reflektierend ausgebildet oder so beschichtet ist.

5. Vorrichtung nach einem der vorhergehenden Ansprüche, **dadurch gekennzeichnet, dass** die Laserlichtquelle (4) eine Laserdiode, ein Quantenkaskadenlaser, ein Bleisalzlaser oder ein Festkörperlaser ist.

6. Vorrichtung nach einem der vorhergehenden Ansprüche, **dadurch gekennzeichnet, dass** die Laserlichtquelle (4) zur Veränderung der Wellenlänge der emittierten Laserstrahlung durchstimmbar ist oder mindestens zwei Laserlichtquellen (4), die Laserstrahlung mit voneinander abweichender Wellenlänge emittieren, vorhanden sind.

7. Vorrichtung nach einem der vorhergehenden Ansprüche, **dadurch gekennzeichnet, dass** an der Detektionskammer (2.2) mindestens ein Fensterelement (6, 7) für den Ein- und oder Austritt von Laserstrahlung in und/oder aus der Detektionskammer (2.2) vorhanden ist/sind.

8. Vorrichtung nach einem der vorhergehenden Ansprüche, **dadurch gekennzeichnet, dass** Laserlichtquelle (4) und/oder optischer Detektor (5) innerhalb der Detektionskammer (2.2) angeordnet ist/sind.

9. Vorrichtung nach einem der vorhergehenden Ansprüche, **dadurch gekennzeichnet, dass** Laserstrahlung im Wellenlängenbereich der infraroten Strahlung und/oder des sichtbaren Lichts eingesetzt ist.

10. Vorrichtung nach einem der vorhergehenden Ansprüche, **dadurch gekennzeichnet, dass** die von der Laserlichtquelle (4) emittierte Laserstrahlung in zwei Laserstrahlen (3) geteilt und einer der Laserstrahlen direkt auf einen optischen Detektor zur Bestimmung eines Referenzsignals gerichtet ist.

11. Vorrichtung nach einem der vorhergehenden Ansprüche, **dadurch gekennzeichnet, dass** Laserlichtquelle (4) und optischer Detektor (5) ein Laserdiodenspektrometer bilden.

12. Vorrichtung nach einem der vorhergehenden Ansprüche, **dadurch gekennzeichnet, dass** zwei Laserstrahlen (3) durch die Detektionskammer (2.2) auf mindestens einen optischen Detektor (5) gerichtet sind.

## Claims

1. A device for determining the rate of permeation of at least one permeate through an element (1) forming a permeation barrier, comprising the element (1) forming the permeation barrier, which element forms a partition between a permeate chamber (2.1) and a detection chamber (2.2), wherein a gas containing at least one permeate or such a liquid or gaseous permeate is supplied or is contained in the permeate chamber (2.1), and radiation from at least one laser light source (4), with a wavelength which corresponds to an absorption wavelength of the respective permeate, is directed as a collimated laser beam (3) through the detection chamber (2.2) onto at least one optical detector (5), for determining the permeation rate at an absorption wavelength of the permeate;
wherein the element (1) is fastened in clamping manner between the permeate chamber (2.1) and detection chamber (2.2); and
the internal volume of the detection chamber (2.2) is smaller than the volume of the permeate chamber (2.1).

2. A device according to Claim 1, **characterised in that** the laser beam (3) within the detection chamber (2.2) changes its direction at least once by reflection, so that the path covered within the detection chamber (2.2) is extended before the laser beam (3) strikes the optical detector (5).

3. A device according to one of the preceding claims, **characterised in that** at least one reflecting element (8, 9) is arranged within the detection chamber (2.2).

4. A device according to one of the preceding claims, **characterised in that** the inner wall of the detection chamber (2.2), at least in regions, is designed to be reflective to the laser radiation or is so coated.

5. A device according to one of the preceding claims, **characterised in that** the laser light source (4) is a laser diode, a quantum cascade laser, a lead salt laser or a solid-state laser.

6. A device according to one of the preceding claims, **characterised in that** the laser light source (4) is tuneable in order to change the wavelength of the emitted laser radiation, or at least two laser light sources (4) which emit laser radiation of wavelengths which differ from one another, are present.

7. A device according to one of the preceding claims, **characterised in that** at least one window element (6, 7) for laser radiation to enter into and/or exit from the detection chamber (2.2) is/are present on the detection chamber (2.2).

8. A device according to one of the preceding claims, **characterised in that** laser light source (4) and/or optical detector (5) is/are arranged within the detection chamber (2.2).

9. A device according to one of the preceding claims, **characterised in that** laser radiation in the wavelength range of infrared radiation and/or of visible light is used.

10. A device according to one of the preceding claims, **characterised in that** the laser radiation emitted by the laser light source (4) is divided into two laser beams (3) and one of the laser beams is directed directly onto an optical detector for determining a reference signal.

11. A device according to one of the preceding claims, **characterised in that** laser light source (4) and optical detector (5) form a laser diode spectrometer.

12. A device according to one of the preceding claims, **characterised in that** two laser beams (3) are directed through the detection chamber (2.2) onto at least one optical detector (5).

## Revendications

1. Dispositif de détermination de la vitesse de perméation d'au moins un perméat par un élément (1) formant une barrière de perméation, comprenant l'élément (1) formant une barrière de perméation qui forme une paroi de séparation entre une chambre de perméat (2.1) et une chambre de détection (2.2), un gaz contenant au moins un perméat ou un tel fluide ou un perméat gazeux étant conduit ou contenu dans la chambre de perméat (2.1), et un rayonnement d'au moins une source de lumière laser (4) ayant une longueur d'onde qui correspond à une longueur d'onde d'absorption du perméat respectif étant dirigé en tant que faisceau laser (3) collimaté, dirigé sur au moins un détecteur (5) optique à travers la chambre de détection (2.2) pour la détermination de la vitesse de perméation en présence d'une longueur d'onde d'absorption ; l'élément (1) étant fixé par serrage entre la chambre de perméat (2.1) et la chambre de détection (2.2) ; et
le volume intérieur de la chambre de détection (2.2) étant inférieur au volume de la chambre de perméat (2.1).

2. Dispositif selon la revendication 1, **caractérisé en ce que** le faisceau laser (3) modifie, à l'intérieur de la chambre de détection (2.2), au moins une fois sa direction par une réflexion de telle sorte que le chemin parcouru à l'intérieur de la chambre de détection (2.2) est allongé avant que le faisceau laser (3) ne frappe le détecteur (5) optique.

3. Dispositif selon l'une des revendications précédentes, **caractérisé en ce qu'**au moins un élément réfléchissant (8, 9) est disposé à l'intérieur de la chambre de détection (2.2).

4. Dispositif selon l'une des revendications précédentes, **caractérisé en ce que** la paroi intérieure de la chambre de détection (2.2) est constituée de façon réfléchissante au moins par tronçons pour le rayonnement laser ou est ainsi revêtue.

5. Dispositif selon l'une des revendications précédentes, **caractérisé en ce que** la source de lumière laser (4) est une diode laser, un laser à cascade quantique, un laser au sel de plomb ou un laser solide.

6. Dispositif selon l'une des revendications précédentes, **caractérisé en ce que** la source de lumière laser (4) est accordable pour faire varier la longueur d'onde du rayonnement laser émis ou **en ce qu'**il y a au moins deux sources de lumière laser (4) qui émettent le rayonnement laser avec une longueur d'onde différente l'une de l'autre.

7. Dispositif selon l'une des revendications précédentes, **caractérisé en ce que**, sur la chambre de détection (2.2), il y a au moins un élément de fenêtre (6, 7) pour l'entrée et ou la sortie du rayonnement laser dans et/ou hors de la chambre de détection (2.2).

8. Dispositif selon l'une des revendications précédentes, **caractérisé en ce que** la source de lumière laser (4) et/ou le détecteur (5) optique est/sont disposé(es) à l'intérieur de la chambre de détection (2.2).

9. Dispositif selon l'une des revendications précédentes, **caractérisé en ce que** le rayonnement laser est mis en oeuvre dans la plage de longueur d'onde du rayonnement infrarouge et/ou de la lumière visible.

10. Dispositif selon l'une des revendications précédentes, **caractérisé en ce que** le rayonnement laser émis par la source de lumière laser (4) est divisé en deux faisceaux laser (3) et **en ce que** l'un des faisceaux laser est dirigé directement sur un détecteur optique pour la détermination d'un signal de référence.

11. Dispositif selon l'une des revendications précédentes, **caractérisé en ce que** la source de lumière laser (4) et le détecteur (5) optique forment un spectromètre à diode laser.

12. Dispositif selon l'une des revendications précédentes, **caractérisé en ce que** deux faisceaux laser (3) sont dirigés à travers la chambre de détection (2.2) sur un moins un détecteur (5) optique.
